# EUROPÄISCHE PATENTANMELDUNG

(11) **EP 1 187 005 A2**
(43) Veröffentlichungstag der Anmeldung: **13.03.2002**
(21) Anmeldenummer: 01114415.1
(22) Anmeldetag: 15.06.2001
(51) Int. Cl.: G06F 9/44

(54) **Verfahren zur Erzeugung einer Bedieneroberfläche für eine Standard-Applikation in einem Browser**

(30) Priorität: 15.06.2000 DE 10028842
(71) Anmelder: Mimoun, Ralf, 50968 Köln (DE)
(72) Erfinder: Mimoun, Ralf, 50968 Köln (DE)
(74) Vertreter: Hublé, Jörn R.

(57) **Zusammenfassung**

Die Erfindung betrifft ein Verfahren und eine Software zur Erzeugung einer Bedienoberfläche für eine Standard-Applikation in einem Fenster eines Browsers eines Arbeitsplatzrechners innerhalb eines Computernetzwerkes. Bei solchen Verfahren läuft auf einem Server die Standard-Applikation ab und zumindest ein Benutzer arbeitet über das Computernetzwerk mit der Standard-Applikation, die dann auf seinem Rechner angezeigt wird und die er ferngesteuert bedienen kann. Sein Arbeitsergebnis wird anschließend der Standard-Applikation zurückgeliefert.

Die bekannten Verfahren haben den Nachteil, dass sie eine spezielle Clientsoftware erfordern. Dies soll die Erfindung vermeiden. Hierzu ist das Verfahren so ausgestaltet, dass in die Standard-Applikation ein Softwaremodul integriert ist, das einzelne Komponenten der Benutzeroberfläche der Standard-Applikation auf dem Browser des Arbeitsplatzrechners wiederzugeben vermag, wobei das Softwaremodul die Lage und die Funktion der Komponenten in einen Standard-Code umsetzt, der von dem Browser interpretiert wird, und die von dem Browser zurückgelieferten Eingaben des Benutzers in dem geforderten Format an die Standard-Applikation übergibt.

## Beschreibung

Die Erfindung betrifft ein Verfahren zur Erzeugung einer Bedienoberfläche für eine Standard-Applikation in einem Fenster eines Browsers, der auf einem Arbeitsplatzrechner eines Computemetzwerkes, insbesondere eines Intranets oder des Internets, läuft, wobei auf einem, mit dem Computernetzwerk verbundenen Server die Standard-Applikation abläuft und zumindest ein Benutzer über das Computernetzwerk von dem Arbeitsplatzrechner aus mit der Standard-Applikation arbeitet und dabei diese über eine Benutzeroberfläche bedienen kann und gegebenenfalls ein Arbeitsergebnis der Standard-Applikation über Ausgabefelder der Benutzeroberfläche zurückgeliefert wird.

Ein derartiges Verfahren ist aus der Anwendung der Software "Citrix™ MetaFrame" bekannt. Diese Software ist in dem Handbuch "Feature Guide for Citrix™ MetaFrame for Windows 2000 Servers", erhältlich über die Internet-Homepage der Firma Citrix Systems Inc., Fort Lauderdale, FL 33309, USA (http://www.citrix.com), bekannt. Sie beinhaltet eine klassische Client-/Server-Verwaltung, bei der verschiedenen Zusatzmodule, wie zum Beispiel sogenannte "Application Server", die das Verteilen der Anwendungen ermöglichen, sowie eine spezielle Clientsoftware auf Seiten des Benutzerrechners benötigt werden. Somit ist sie zum Bedienen einer Software über einen beliebigen Web-Browser nicht geeignet.

Eine weitere bekannte Software zur Durchführung eines gattungsgemäßen Verfahrens ist "GraphOn Bridges™" der Firma GraphOn Corp., Cambell, CA 95008, USA (http://www.graphon.com), die in dem über die Homepage des Herstellers erhältlichen Handbuch "Bridges™ Product Sheet" beschrieben ist. Diese Software läuft auf einem Server, wobei die Fensterinhalte an eine spezielle Clientsoftware weitergeleitet werden. Dabei wertet Bridges™ nicht den Aufbau des Anwendungsfensters aus sondern leitet die API-Aufrufe des Betriebssystems zum Zeichnen des Fensterinhaltes an die Clientsoftware weiter.

Ferner kann ein Programmierer einer Standard-Applikation eine Anwendung als sogenanntes ActiveX™-Control realisieren. Dieses ActiveX™-Control ist eine Datei, die auf Arbeitsplatzrechnern mit dem Betriebssystem Microsoft Windows™ anstelle der Standard-Applikation ausgeführt werden kann. Dies bedeutet jedoch in der Praxis, dass das gesamte Programm übertragen und im Fenster des Browsers dargestellt wird, wobei, da kein HTML-Code erzeugt wird, auf dem browserseitigen Arbeitsplatzrechner das Programm betriebssystemabhängig wird.

Aufgabe der Erfindung ist daher, ein Verfahren und eine Software zu schaffen, die ohne Anforderungen an den Arbeitsplatzrechner und den darauf installierten Browser eine leichte Darstellung der Benutzeroberfläche einer Standard-Applikation sowie eine Bedienung der Standard-Applikation über den Browser ermöglicht.

Diese Aufgabe wird nach der Erfindung dadurch gelöst, dass in die Standard-Applikation ein Softwaremodul integriert ist, das einzelne Komponenten der Benutzeroberfläche der Standard-Applikation auf dem Browser des Arbeitsplatzrechners wiederzugeben vermag, wobei das Softwaremodul die Lage und die Funktion der Komponenten in einen Standard-Code umsetzt, der von dem Browser interpretiert wird, und die von dem Browser zurückgelieferten Eingaben des Benutzers in dem geforderten Format an die Standard-Applikation übergibt.

Durch die erfindungsgemäße Ausgestaltung des Verfahrens wird nun auf Seiten des Servers üblicher Code des im dem Computernetzwerk verwendeten Übertragungsprotokolls eingesetzt, um die Seite mit der Benutzeroberfläche in dem Browser darzustellen. Im Regelfall wird das Computernetzwerk dabei das Internet sein und die Benutzeroberfläche in einen HTML- oder XML-Code umgesetzt, so dass für den Benutzer an seinem Arbeitsplatzrechner die Benutzeroberfläche des von ihm aufgerufenen Servers wie eine übliche Seite des Internets aussieht, die im Browser dargestellt wird.

Als Standard-Applikation wird dabei jede fertige und lauffähige Software angesehen, die zum Beispiel auf dem Server installiert ist oder auch nur auf diesem abläuft. Dies kann ein klassisches Textverarbeitungsprogramm, ein Datenbankprogramm oder auch eine Branchensoftware sein. Auch Steuer- und Verwaltungsprogramme oder alle anderen theoretischen Anwendungen kommen in Betracht. Durch Einbinden des Softwaremoduls in die Standard-Applikation, beispielsweise einem handelsüblichen Textverarbeitungs- oder Tabellenkalkulationsprogramm, kann dieses nun bei unwesentlicher Änderung des Layouts der Benutzeroberfläche in einem Webbrowser dargestellt werden, ohne dass eine spezielle Software auf Seiten des Arbeitsplatzrechners notwendig ist. Dies ermöglicht eine ferngesteuerte Bedienung aller mit dem Softwaremodul ausgerüsteter Programme, wobei das Softwaremodul einfach als aufrufbare Funktion oder ausführbares Objekt in den Quellcode der Standard-Applikation eingebettet wird. Für den Programmierer der Standard-Applikation entsteht so denkbar geringer Aufwand. Der Benutzer andererseits kann von der Möglichkeit der Fernbedienung Gebrauch machen, ohne teuere Zusatzsoftware kaufen zu müssen oder umständliche Installationsarbeiten an seinem System vornehmen zu müssen. Im Internet etwa erscheint für ihn erscheint die Benutzeroberfläche wie eine übliche Seite des Internets mit dem gewohnten Layout der Standard-Applikation.

So kann beispielsweise eine Branchensoftware mit dem Softwaremodul ausgestattet werden, die dem Benutzer ermöglicht, seine eigentlich am Arbeitsplatz genutzte Software auch von einem privaten Rechner zuhause zu bedienen. Auch eine Fernbedienung einer Steuerungssoftware über das Internet wird durch die Erfindung möglich. So kann zum Beispiel eine Steuerungssoftware einer Telefonanlage mit dem Softwaremodul ausgestattet werden, so dass der Wartungstechniker über das Internet die Software, die beispielsweise auf einem Rechner des Betreibers der Anlage installiert ist, bedienen und damit die erforderliche Einstellung vornehmen kann.

Bei einer bevorzugten Ausgestaltung der Erfindung sind die Komponenten der Benutzeroberfläche Auswahllisten, Eingabefelder und Ausgabefelder, wobei - natürlich im Rahmen der Beschränkung durch die Auflösung des Monitors - praktisch nahezu beliebig viele unterschiedliche Komponenten dargestellt werden können. Komponenten können alle funktionalen Bauteile sein, die auf der Benutzeroberfläche der Standard-Applikation angezeigt werden. In der Regel werden dies insbesondere Buttons, also mit der Maus bedienbare Druckknöpfe zum Auslösen einer Aktion, Texteingabefelder, Textausgabefelder, Auswahllisten sein. Aber auch alle anderen Komponenten, die auf der Benutzeroberfläche platziert werden können, sind möglich.

Üblicherweise wird das Softwaremodul alle Komponenten erkennen und in den gewählten Code, etwa HMTL-Code, umsetzen. Im Falle eines Bestätigungsfeldes, einer sogenannten Check-Box, kann dann etwa die Größe und Erscheinungsform des Bestätigungsfeldes und die erwartete bzw. mögliche Eingabe des Benutzers übermittelt werden. Unbekannte oder nicht identifizierbare Objekte werden als Graphik interpretiert und übermittelt. Dies kann zum Bespiel eine GIF- oder JPG-Datei sein, die schnell übertragen werden kann. Der Browser wird dann die Eingabe des Benutzers, die er der Art nach wegen des unbekannten Objekts nicht vorhersehen kann, an den Server übertragen, wobei das Softwaremodul die Daten dann unter Angabe von Art und Inhalt der Eingabe und der Koordinaten, an denen diese erfolgt ist, an die Standard-Applikation übermittelt. So können in den meisten Fällen auch unbekannte Objekte im Browser dargestellt werden und die Funktionalität trotz der fehlenden Erkennung aufrechterhalten werden.

Das Softwaremodul ist aus Sicht des Arbeitsplatzrechners ein normaler Server, von dem Seiten in dem vordefinierten Format weitergeleitet werden. Das kann beispielsweise eine HTML-codierte Seite sein, auch eine XML-codierte Seite ist möglich. Bevorzugt wird über das Softwaremodul die Position der einzelnen Komponenten auf der Benutzeroberfläche der Standard-Applikation ermittelt, indem das Softwaremodul ein Abbild dieser Benutzeroberfläche abruft und die Position der aufgefundenen Komponenten in einen Pufferspeicher übernimmt. Aus den so ermittelten Positionen kann dann ein Raster erstellt werden, mit dessen Hilfe die im Browser darzustellenden Äquivalente der Komponenten angeordnet werden, so dass sie identisch oder zumindest sehr ähnlich dem Layout der tatsächlichen Benutzungsoberfläche im Browser dargestellt sind.

Bevorzugt wird zur Erzeugung der Bedienoberfläche das Abbild der Benutzeroberfläche der Standard-Applikation ermittelt, indem es durch Routinen abgefragt wird. Dies ist leicht über vorhandene Routinen möglich, die beispielsweise auch zur Wiederauffrischung des Bildschirms auf einem Computers nach Überlagerung durch ein Fenster oder Aktivierung eines Bildschirmschoners aufgerufen werden. Mit dem zwischengespeicherten Ergebnis dieses Aufrufes kann dann der Code generiert, der zur Darstellung von Komponenten im Browser benötigt wird. Nach dem der Benutzer eine Eingabe auf der im Browser dargestellten Version der Benutzeroberfläche getätigt hat, wird diese über das Computernetzwerk an den Server zurückgeleitet, wo die Eingabe dann durch das Softwaremodul den zugehörigen Komponenten zugewiesen wird. Diese Zuweisung der Eingaben an die Komponenten kann zum Beispiel über Betriebssystemroutinen erfolgen.

Neben der Position und der Art der einzelnen Komponenten können auch weitere Informationen über die Komponenten, wie beispielsweise im Falle eines Textfeldes die Größe, die Farbe und auch die Schriftart bzw. die Schriftgröße eines dargestellten Textes ermittelt und dem Browser übergeben werden, so dass das Layout der Browserdarstellung noch weiter demjenigen der Benutzeroberfläche angepasst werden kann.

Die Ausstattung der Standard-Applikation mit dem Softwaremodul ermöglicht zwar eine Generierung einer über den Browser darstellbaren Seite, hat jedoch zunächst noch den Nachteil, dass damit keine tatsächliche Netzwerkfähigkeit des Servers erzeugt wird. Soll also auf dem Server ein beliebiges Betriebssystem installiert sein können, müsste ein weiteres Modul die administrativen Aufgabe eines Netzwerkbetriebssystems übernehmen. Hierzu ist bei einer vorteilhaften Ausgestaltung des Verfahrens der Server mit einer Verwaltungssoftware ausgerüstet, die beispielsweise während des Serverbetriebes "läuft", also aktiv ist. Diese Verwaltungssoftware kann dann auf Anforderung eines Benutzers über dessen Browser eine gewünschte Standard-Applikation von denjenigen, die auf dem Server zur Verfügung stehen, starten und die Übertragung zwischen dem Server und dem Arbeitsplatzrechner organisieren.

Zu den möglichen Aufgaben dieser Verwaltungssoftware, die Teil des Betriebssystems als sogenannte "Schicht" unterhalb der Anwenderebene sein kann, gehört die Verwaltung der Zugriffsberechtigungen, der Adressen der aufrufbaren Programme und die Organisation sowie die Verwaltung eines Multitaskingbetriebes. So kann zum Beispiel ein erster Benutzer die Standard-Applikation A aufrufen. Die Verwaltungssoftware startet dann auf dem Server eine Kopie dieser Standard-Applikation, mit der der erste Benutzer dann arbeiten kann. Möchte nun während dieser Arbeit des ersten Benutzers ein zweiter Benutzer auf die gleiche Standard-Applikation A zugreifen, organisiert die Verwaltungssoftware den Start einer weiteren Kopie, mit der dann der zweite Benutzer arbeiten kann.

Alternativ kann auf dem Server auch eine Verwaltungssoftware installiert sein, die von anderen Servern über das Datenverarbeitungsnetzwerk als Bibliothek (ISAPI) oder als selbständig lauffähiges Programm (CGI) aufgerufen werden kann. In diesem Fall wird die Netzwerkfähigkeit über eine Client-/Server-Anwendung realisiert, über die ein anderer Rechner des Datenverarbeitungsnetzwerkes die Server-Funktionen teilweise zur Verfügung stellt und teilweise aufruft.

Schwierig ist bei dem erfindungsgemäßen Verfahren die Übermittlung der Menü-Zeilen der Standard-Applikation, da diese dynamischen Elemente nicht auf einfache Weise in ein geeignetes Format zur Darstellung von standardisierten Komponenten umgesetzt werden können. Bevorzugt wird daher über das Softwaremodul die Menüzeile mit den einzelnen Menüpunkten der Standard-Applikation in eine von Browser interpretierbare Form transformiert. Dies bedeutet, dass beispielsweise das Softwaremodul einen Programmcode zur Erzeugung der Menüzeile in dem Browserfenster erzeugt, der von einem in dem Browser integrierten Interpreter in einen lauffähigen Code umgesetzt werden kann.

Das Script Programm kann insbesondere ein Java-Script Programm sein kann, wobei natürlich auch alle anderen Sprachen, wie zum Beispiel eine VB-Script (Visual-Basic-Script) in Betracht kommen, die von dem Browser interpretiert werden können. Über das Script Programm können leicht komplexe Menü- und Untermenüstrukturen umgesetzt werden, selbst wenn, wie beispielsweise im Falle der Microsoft-Office Familie, die Menüs abhängig von der Bedienung des Programm durch Änderung der Menüpunkte oder durch Änderung der Farbe der Menüpunkte veränderlich sind. Auch andere funktionale Bereiche der Benutzeroberfläche können so in einen leicht übertrag- und darstellbaren Code umgesetzt werden.

Unter Script Programm soll dabei insbesondere ein kleines Applet verstanden werden. Geeignet ist dieses Verfahren insbesondere dann, wenn es in der Lage ist, einen möglichst kleinen Programmcode zu erzeugen. Alternativ zu dieser Methode kann das Menü auch in einzelne vom Browser interpretierbare graphische Komponenten, etwa in eine Mehrzahl von Buttons umgewandelt werden. Diese Möglichkeit bietet sich insbesondere für Menüs mit nur wenigen Menüpunkten an, da ansonsten die Buttons nicht auf dem Bildschirm des Arbeitsplatzrechners dargestellt werden könnten, ohne dass entweder sie oder die benötigte Fläche für die Darstellung der Benutzeroberfläche der Standard-Applikation zu klein würde.

Bei einer möglichen Weiterbildung des erfindungsgemäßen Verfahrens wird die in dem Browser darzustellenden Seite mit der Benutzeroberfläche von dem Softwaremodul nach dem CSS-Standard (CSS=Cascading Style Sheets) generiert wird. Das Verfahren kann zur Darstellung von Benutzeroberflächen in einem Web-Browser genutzt werden, seine Anwendung kann aber auch auf ein Intranet beschränkt sein. So ist es beispielsweise möglich, auf eine aufwendige Netzwerksoftware in kleineren Arbeitsgruppen zu verzichten und statt dessen über ein Intranet die jeweils benötigte Software, wie zum Beispiel eine Branchenlösung, eine Abfragesoftware für Datenbanken oder CD-Roms oder ähnliche Produkte auf dem Rechner des Kollegen abzurufen.

Schließlich betrifft die Erfindung nicht nur das oben beschriebene Verfahren, sondern darüber hinaus auch die Software mit den Programmcode-Mitteln, die zur Umsetzung dieser möglichen Ausgestaltungen des Verfahrens notwendig ist. Die Software wird dabei im wesentlichen von dem Softwaremodul gebildet, das in die Standard-Applikation eingebettet werden sollte. Zusätzlich kann die Verwaltungssoftware in einer der oben beschriebenen Formen auf den Server installiert sein bzw. ablaufen. Benutzerseitig dagegen muss lediglich ein Web-Browser vorhanden sein, den heute beinahe jeder Computer aufweist.

Weitere Merkmale und Vorteile der Erfindung ergeben sich aus den Unteransprüchen.

## Patentansprüche

1. Verfahren zur Erzeugung einer Bedienoberfläche für eine Standard-Applikation in einem Fenster eines Browsers, der auf einem Arbeitsplatzrechner eines Computemetzwerkes, insbesondere eines Intranets oder des Internets, läuft, wobei auf einem, mit dem Computernetzwerk verbundenen Server die Standard-Applikation abläuft und zumindest ein Benutzer über das Computernetzwerk von dem Arbeitsplatzrechner aus mit der Standard-Applikation arbeitet und diese über eine Benutzeroberfläche bedienen kann sowie gegebenenfalls ein Arbeitsergebnis der Standard-Applikation über Ausgabefelder der Benutzeroberfläche zurückgeliefert wird, **dadurch gekennzeichnet, dass** in die Standard-Applikation ein Softwaremodul integriert ist, das einzelne Komponenten der Benutzeroberfläche der Standard-Applikation auf dem Browser des Arbeitsplatzrechners wiederzugeben vermag und das für jede Komponente die Koordinaten ermittelt, an denen die Komponente auf der Benutzeroberfläche angeordnet ist, die Koordinaten und die Funktion der Komponenten in einen von dem Browser interpretierbaren Standard-Code umsetzt und die von dem Browser zurückgelieferten Eingaben des Benutzers in dem geforderten Format an die Standard-Applikation übergibt, wobei die Komponenten anhand des Standard-Codes im Browser ähnlich oder identisch zu der Anordnung in der Benutzeroberfläche der Standard-Applikation dargestellt werden.

2. Verfahren zur Erzeugung einer Bedienoberfläche für eine Standard-Applikation in einem Browser eines Computernetzwerkes nach Anspruch 1, **dadurch gekennzeichnet, dass** die Komponenten Auswahllisten, Eingabefelder und/oder Ausgabefelder umfassen und dass das Softwaremodul Komponenten, die es nicht erkennt, als Graphik interpretiert, die Information zur Darstellung einer der Graphik entsprechenden Bildkomponente in dem Fenster des Browsers darstellt und die diese Bildkomponente betreffenden Eingaben des Benutzers an den Server zurückübermittelt.

3. Verfahren zur Erzeugung einer Bedienoberfläche für eine Standard-Applikation in einem Browser eines Computernetzwerkes nach einem der vorhergehenden Ansprüche, **dadurch gekennzeichnet, dass** neben den Koordinaten der Komponenten auf der Benutzeroberfläche der Standard-Applikation auch deren Größe, Farbe und im Falle von Textkomponenten auch die Schriftart und die Schriftgröße eines dargestellten Textes ermittelt und dem Browser übermittelt werden.

4. Verfahren zur Erzeugung einer Bedienoberfläche für eine Standard-Applikation in einem Browser eines Computernetzwerkes nach einem der vorhergehenden Ansprüche, **dadurch gekennzeichnet, dass** das Softwaremodul die Komponenten der Benutzeroberfläche und deren Anordnung auf einem Abbild der Benutzeroberfläche der Standard-Applikation ermittelt und einen Code generiert, der zur Darstellung von Komponenten im Browser benötigt wird, die zu den ermittelten Komponenten identisch oder ähnlich sind, wobei die von dem Browser an das Softwaremodul zurückgelieferten Eingaben den zugehörigen Komponenten zugewiesen werden.

5. Verfahren zur Erzeugung einer Bedienoberfläche für eine Standard-Applikation in einem Browser eines Computernetzwerkes nach dem vorhergehenden Anspruch, **dadurch gekennzeichnet, dass** die Zuweisung der Eingaben an die Komponenten über Betriebssystemroutinen erfolgt.

6. Verfahren zur Erzeugung einer Bedienoberfläche für eine Standard-Applikation in einem Browser eines Computernetzwerkes nach einem der vorhergehenden Ansprüche, **dadurch gekennzeichnet, dass** auf dem Server eine Verwaltungssoftware läuft, die auf Anforderung eines Benutzers über den Browser eine gewünschte Standard-Applikation von den auf dem Server zur Verfügung stehenden Standard-Applikationen startet und die Übertragung zwischen dem Server und dem Arbeitsplatzrechner organisiert und verwaltet.

7. Verfahren zur Erzeugung einer Bedienoberfläche für eine Standard-Applikation in einem Browser eines Computernetzwerkes nach einem der Ansprüche 1 bis 5, **dadurch gekennzeichnet, dass** die auf dem Server installierte Verwaltungssoftware von anderen Servern unmittelbar oder über eine geeignete Schnittstelle als Bibliothek (ISAPI) oder als selbständig lauffähiges Programm (CGI) aufgerufen werden kann, die die anwendungsseitigen Server-Funktionen zur Verfügung stellt, wobei die Verwaltungssoftware bei eingehenden Anforderungen die Zugangsberechtigung des Benutzers überprüft.

8. Verfahren zur Erzeugung einer Bedienoberfläche für eine Standard-Applikation in einem Browser eines Computernetzwerkes nach einem der vorhergehenden Ansprüche, **dadurch gekennzeichnet, dass** zur Bildung einer Netzwerkfähigkeit die Verwaltungssoftware bei mehrfacher Anforderung einer Standard-Applikation für jede Anforderung die Standard-Applikation einmal startet.

9. Verfahren nach einem der vorstehenden Ansprüche, **dadurch gekennzeichnet, dass** der von dem Softwaremodul generierte Code Script-Routinen enthält, die von dem Browser interpretierbar sind.

10. Software mit Programmcode-Mitteln, die dazu geeignet sind, das Verfahren nach einem der Ansprüche 1 bis 9 dann durchzuführen, wenn das Programm auf dem Server ausgeführt wird, wobei sie die Standard-Applikation mit dem Softwaremodul umfasst.

11. Software nach Anspruch 10 zur Durchführung eines Verfahrens nach Anspruch 6 oder 7 oder nach einem der Ansprüche 6 oder 7 in Verbindung mit einem der Ansprüche 8, 9 oder 10, **dadurch gekennzeichnet, dass** sie zusätzlich die Verwaltungssoftware umfasst.

12. Software nach Anspruch 10 oder 11, **dadurch gekennzeichnet, dass** die Programmcode-Mittel auf einem Datenträger gespeichert sind.

13. Datenverarbeitungsnetzwerk mit zumindest einem Server und wenigstens einem mit diesem Server verbundenen Arbeitsplatzrechner, wobei auf dem Server die Software nach Anspruch 10 oder 11 installiert ist und auf dem Arbeitsplatzrechner der Browser installiert ist.
